# EUROPÄISCHE PATENTANMELDUNG

(11) **EP 2 762 262 A1**
(43) Veröffentlichungstag der Anmeldung: **06.08.2014**
(21) Anmeldenummer: 13153575.9
(22) Anmeldetag: 01.02.2013
(51) Int. Cl.: B23K 26/34, B23P 6/00, F01D 5/00, B23K 26/00

(54) **Schweißverfahren mit Dicken abhängiger Schweißleistung**

(71) Anmelder: Siemens Aktiengesellschaft, 80333 München (DE)
(72) Erfinder: Burbaum, Bernd, 14612 Falkensee (DE)

(57) **Zusammenfassung**

Durch eine a priori-Berechnung der Laserleistung aufgrund von Wärmeleitung wird die Leistung dickenabhängig entlang der Schweißspur festgelegt, so dass eine konstante Dicke einer Schweißspur erzielt wird.

## Beschreibung

Die Erfindung betrifft ein Verfahren zum Schweißen, bei dem die Schweißleistung an die Dicke eines Substrats angepasst wird.

Bei beanspruchten Komponenten, hergestellt aus polykristallin erstarrten Nickelbasis-Superlegierungen ist ein Randschichtumschmelzen von oberflächennahen Rissen mittels Laserstrahlung angestrebt, um die Risse zu schließen und um die mechanischen Eigenschaften der zu reparierenden Komponenten im Bereich des Grundwerkstoffs zu erhalten. Bei Umschmelzen von Bereichen einer Turbinenschaufel mit relativ großen Sprüngen in den Materialdicken (3mm - 1mm) kann es beim Umschmelzen mit konstanter Laserleistung an der Schmelzbadoberfläche zu unterschiedlichen Schmelzbadtiefen kommen.

Es ist daher Aufgabe der Erfindung oben genanntes Problem zu lösen.

Die Aufgabe wird gelöst durch ein Verfahren gemäß Anspruch 1.

Bisher durchgeführte Untersuchungen an Probengeometrien aus Nickelbasis-Superlegierungen zeigen, dass durch das Umschmelzen mit konstanter Prozesstemperatur an der Schmelzbadoberfläche die Abweichungen in der Umschmelztiefe im Vergleich zum Umschmelzen mit konstanter Laserleistung um 50% verkleinert werden.
Jedoch wird eine vorteilhafte Umschmelztiefe entlang der umgeschmolzenen Spur nur durch eine im voraus (a priori) berechnete wegabhängige Schweißleistung erzielt.

In den Unteransprüchen sind weitere vorteilhafte Maßnahmen aufgelistet, die beliebig miteinander kombiniert werden können, um weitere Vorteile zu erzielen.

Es zeigen:
- Figuren 1, 2, 3: erfindungsgemäße Abläufe bzw. Ergebnisse des Verfahrens,
- Figur 4: eine Liste von Superlegierungen.

Die Figuren und die Beschreibung stellen nur Ausführungsbeispiele der Erfindung dar.

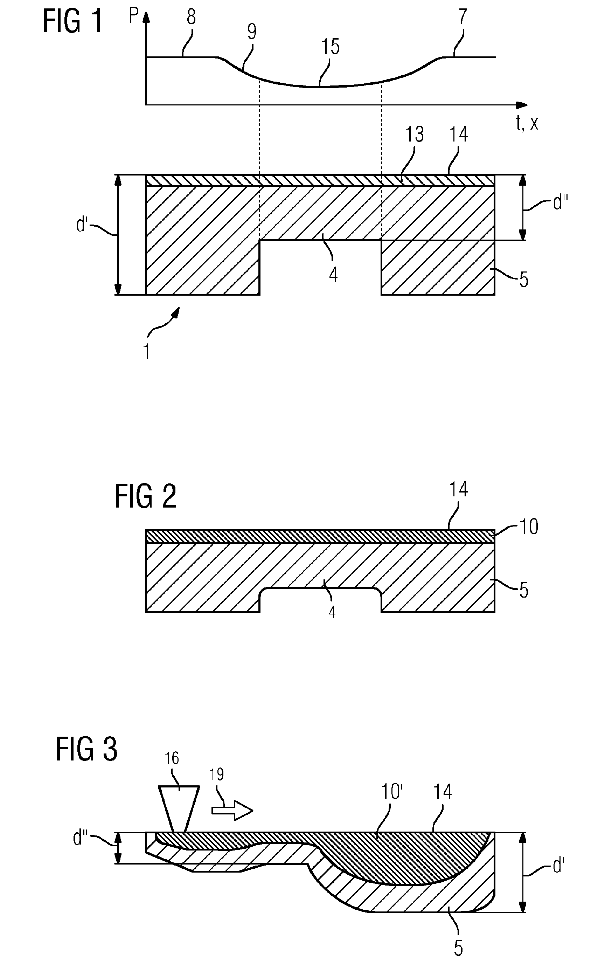

In Figur 1 ist schematisch ein Bauteil 1 aus einem Substrat 5 dargestellt, das einem Schweißverfahren an der Oberfläche 14 unterzogen wurde und wobei die Schweißleistung P in Abhängigkeit von der Dicke d', d" entlang der Strecke x oder der Zeit t dargestellt ist.

Das Substrat 5 weist in einem Bereich 4 eine dünnere Wandstärke d" (< d') auf, weil dort bspw. im Inneren ein Kanal vorhanden ist.
Dies ist z.B. bei Turbinenschaufeln der Fall, die im Inneren mäanderförmige Kühlkanäle aufweisen, die durch Wände begrenzt sind. Ein solcher Kühlkanal stellt eine Vertiefung oder einen dünneren Wandbereich 4 dar.

Das Substrat 5 soll an der Oberfläche 14 vorzugsweise umgeschmolzen werden oder eine Auftragsschweißung soll stattfinden. Besonders eignet sich das Verfahren zum Umschmelzen.

Es findet keine Regelung der Schweißleistung aufgrund der Temperatur der Schmelzbadoberfläche im Bereich des Fokus des Schweißstrahls 16 (Fig. 3) statt, sondern es wird a priori eine Simulation der Schmelzbadtiefe durchgeführt, die auf Wärmeleitungsberechnungen entlang der Schweißspur 13 und Schweißrichtung 19 durchgeführt wird.

Ziel der Anpassung der Schweißleistung P ist es vorzugsweise, eine konstante Dicke des umgeschmolzenen - oder aufgetragenen Bereichs 13 zu erzielen.

In Figur 1 ist dies dargestellt, bei dem in dem dickeren Bereich d' eine gewisse Schweißleistung P am Anfang 8 vorhanden ist, die schon abgesenkt 9 wird, wenn der Schweißstrahl 16 (Fig. 3) sich dem dünneren (d") Bereich 4 nähert oder noch nicht erreicht hat.
Die Schweißleistung P erreicht erst einen minimalen Wert 15, wenn der Bereich 4 bereits durch den Schweißstrahl 16 erreicht ist.
Die Schweißleistung P steigt auch nach Durchqueren des dünneren (d") Bereichs 4 weiter an bis er wieder einen höheren Wert 7 erreicht.

Der Kurvenverlauf der Schweißleistung P ist nur schematisch dargestellt.
Kennzeichnend ist, dass die Schweißleistung P nicht entsprechend der Kontur des Bereichs 4 ausgestaltet ist, also nicht rampenartig abgesenkt wird, sondern vorher vor dem Erreichen des dünneren (d") Bereichs 4 abgesenkt wird und auch vorzugsweise nach Verlassen des dünneren (d") Bereichs 4 erst wieder langsam ansteigt und nicht wieder rampenartig hochgefahren wird.

Dies ist bedingt durch die Wärmeleitung, die dazu führt, dass auch noch umzuschmelzende Bereiche vorab schon durch einen Wärmefluss erwärmt werden und der notwendige Energieeintrag zum Aufschmelzen, Aufheizen verringert wird. Die Wärmeleitung wird beeinflusst durch den Wärmeeintrag des Schweißstrahls 16 und dem Querschnitt (Dicke) des aufzuschmelzenden Bereichs 13 und auch der Dicke des Materials quer zur Verfahrrichtung 19 des Schweißstrahls 16.

Figur 2 zeigt ein Versuchsergebnis, bei dem ein Bereich 4 mit einer dünneren Wand vorhanden ist und ein Umschmelzbereich 10, der eine relativ konstante Umschmelztiefe aufweist.

In Figur 1 wurde davon ausgegangen, dass eine maximale Risstiefe vorhanden ist, aufgrund derer die umzuschmelzende Dicke des Umschmelzbereichs 13 festgelegt wird.
Es ist aber auch möglich, dass die Risstiefen entlang einer Verfahrrichtung 19 stark unterschiedlich sind und im dickeren Bereich d' die Dicke d" eines dünneren Bereichs überschreitet (Fig. 3).
Auch hier kann die Schweißleistung berechnet werden, um den Riss an seinen unterschiedlichen Risstiefen optimal und lokal angepasst umzuschmelzen, um verschieden dicke oder dickere Umschmelzbereiche 10' zu erzielen.

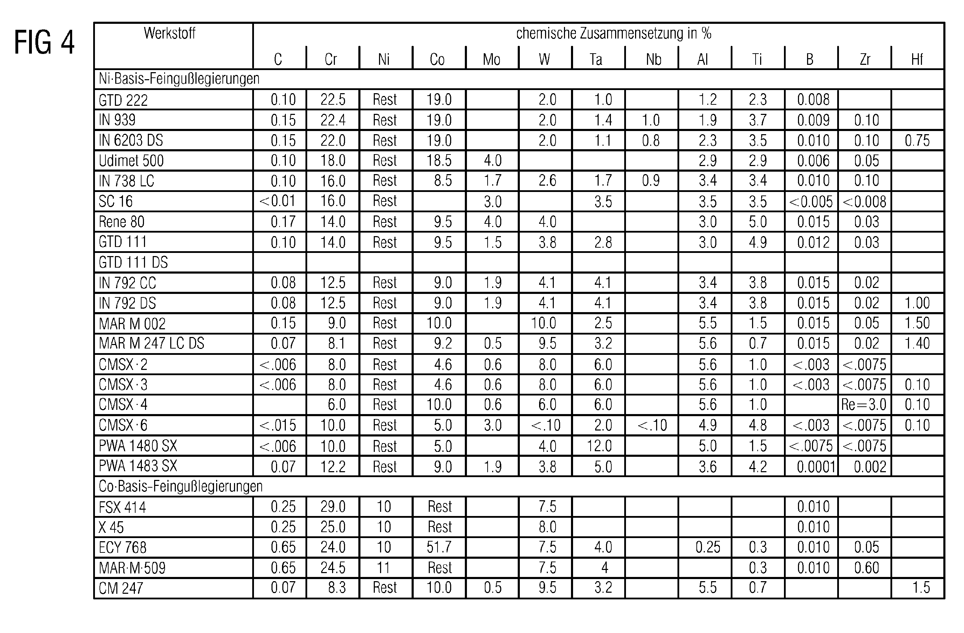

Vorzugsweise wird das Verfahren für nickel- oder kobaltbasierte Superlegierungen durchgeführt.
Das Substrat 5 wird vorzugsweise eine nickel- oder kobaltbasierte Superlegierung auch ganz insbesondere nach Figur 4.

## Patentansprüche

1. Schweißverfahren,
bei dem die Schweißleistung (P) einer sich ändernden Wanddicke (d', d", ...) eines Substrats (5) angepasst wird, insbesondere während des Schweißverfahrens.

2. Verfahren nach Anspruch 1,
bei dem die Schweißleistung (P) a priori aufgrund von Wärmeleitungsberechnungen im unterschiedlich dicken (d', d") Substrat (5) entlang einer Verfahrrichtung (19) eines Schweißstrahls (16) bestimmt wird.

3. Verfahren nach einem oder beiden der Ansprüche 1 oder 2,
bei dem die Schweißleistung (P) in einem Bereich (4) niedriger ist,
in dem (4) ein dünnerer Wandbereich (d") des Substrats (5) vorhanden ist.

4. Verfahren nach einem oder mehreren der Ansprüche 1, 2 oder 3,
bei dem die Schweißleistung (P) eines Schweißstrahls (16) vor Erreichung des dünneren (d") Wandbereichs (4) zurückgefahren wird.

5. Verfahren nach einem oder mehreren der Ansprüche 1 bis 4,
bei dem die Schweißleistung (P) auch nach Überqueren des dünneren (d") Wandbereichs (4) auch noch im dickeren Bereich (d') hochgefahren wird.

6. Verfahren nach einem oder mehreren der Ansprüche 1 bis 5,
bei dem die Schweißleistung (P) nicht exakt dem Verlauf der Dickenverhältnisse (d', d", ...) des Substrats (5) entspricht.

7. Verfahren nach einem oder mehreren der Ansprüche 1 bis 6,
bei dem das Schweißverfahren ein Laserschweißverfahren darstellt.

8. Verfahren nach einem oder mehreren der vorherigen Ansprüche,
bei dem ein Umschmelzverfahren durchgeführt wird.

9. Verfahren nach einem oder mehreren der vorherigen Ansprüche,
bei dem ein polykristallines Substrat (5) bearbeitet wird.

10. Verfahren nach einem oder mehreren der Ansprüche 1 bis 9,
bei dem eine konstante Schmelzbodentiefe eines Umschmelzbereichs (13, 10) erzielt wird.

11. Verfahren nach einem oder mehreren der Ansprüche 1 bis 9,
bei dem unterschiedliche Schmelzbadtiefen eines Umschmelzbereichs (10') erzielt werden.

12. Verfahren nach einem oder mehreren der Ansprüche 1 bis 9,
bei dem ein Auftragsschweißverfahren durchgeführt wird.
